# EUROPEAN PATENT APPLICATION

(11) **EP 4 760 860 A1**
(43) Date of publication of application: **17.06.2026**
(21) Application number: 25797785.0
(22) Date of filing: 07.04.2025
(51) Int. Cl.: H01M 10/42, H01M 50/581, H01M 10/6568, H01M 50/342

(54) **BATTERY PACK AND VEHICLE INCLUDING SAME**

(30) Priority: 03.05.2024 KR 20240059288
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2025/004648
(87) International publication number: WO 2025/230160

(57) **Abstract**

Disclosed is a battery pack, which includes a plurality of battery modules; a pack case configured to accommodate the plurality of battery modules therein; a cooling channel provided inside a bottom plate of the pack case; cross beams configured to form a wall between the battery modules so that the battery modules are arranged in partitioned spaces, respectively; and a cooling path blocking unit configured to selectively block a cooling channel located under a certain battery module when a thermal event occurs in the certain battery module among the battery modules.

## Description

### TECHNICAL FIELD

The present disclosure relates to a battery pack, and more specifically, to a battery pack capable of delaying or suppressing the propagation of thermal energy of a battery module in which a thermal event occurs within the battery pack.

The present application claims priority to Korean Patent Application No. 10-2024-0059288 filed on May 3, 2024 in the Republic of Korea, the disclosures of which are incorporated herein by reference.

### BACKGROUND ART

Secondary batteries, which have high applicability according to product groups and electrical characteristics such as high energy density, are widely used not only in portable devices but also in electric vehicles (EVs) or hybrid electric vehicles (HEVs) driven by electric power sources. The secondary batteries are attracting attention as a new energy source for environmental friendliness and energy efficiency enhancement, not only because they may drastically reduce the use of fossil fuels, but also because they do not generate any byproducts from energy use.

Types of secondary batteries widely used at present include lithium ion batteries, lithium polymer batteries, nickel cadmium batteries, nickel hydrogen batteries, and nickel zinc batteries. When a high output voltage is required, a plurality of battery cells are connected in series to form a battery module or a battery pack. In addition, a plurality of battery cells are connected in parallel to form a battery module or a battery pack in order to increase the charge/discharge capacity. Therefore, the number of battery cells included in the battery module or the battery pack may be set variously depending on the required output voltage or charge/discharge capacity.

In general, the operating voltage of a secondary battery is approximately 2.5 V to 4.5 V. Therefore, for electric vehicles or power storage systems that require large capacity and high output, a battery module in which a number of secondary batteries are connected in series and/or in parallel, and a battery pack in which the battery modules are connected in series and/or in parallel are configured and used as an energy source.

Meanwhile, battery packs are recently designed to accommodate as many battery modules as possible, including as many secondary batteries as possible, in order to improve energy density. The battery packs are criticized for their low fire safety because if one of the battery modules ignites, the heat energy may be quickly propagated, easily causing a chain reaction to other battery modules.

Accordingly, in the art, it is emerging as an important task to provide a method to delay or suppress the propagation of thermal energy between battery modules within a battery pack in preparation for the issue of battery module ignition when designing a battery pack.

### DISCLOSURE

### Technical Problem

The present disclosure is designed to solve the problems of the related art, and therefore the present disclosure is directed to providing a battery pack with enhanced fire safety compared to the conventional art by delaying or suppressing the propagation of heat energy generated from an ignited battery module within the battery pack.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack comprising: a plurality of battery modules; a pack case configured to accommodate the plurality of battery modules therein; a cooling channel provided inside a bottom plate of the pack case; cross beams configured to form a wall between the battery modules so that the battery modules are arranged in partitioned spaces, respectively; and a cooling path blocking unit configured to selectively block a cooling channel located under a certain battery module when a thermal event occurs in the certain battery module among the battery modules.

The cooling path blocking unit may include a blocking block member having an electromagnet arranged inside the cross beam and electrically connected to each of the battery modules; and a magnetic body provided inside the bottom plate of the pack case and disposed to face the electromagnet so that a repulsive force is applied with the cooling channel being interposed therebetween, and when a thermal event occurs in the certain battery module, a current supply to the electromagnet may be cut off so that the blocking block member falls and closes at least a part of the cooling channel flowing into the certain battery module.

A fuse unit may be coupled with a cable, which connects the certain battery module and the blocking block member, to block the flow of current based on a predetermined temperature or signal.

The fuse unit may be a thermal fuse.

The blocking block member may include a weight balance member disposed on an upper portion of the electromagnet.

The weight balance member may include an insulating material.

The cooling channel may include a main channel having a cooling medium inlet and a cooling medium outlet communicating with an outside of the pack case; branch channels branching from the main channel and passing through lower portions of the corresponding cross beams, respectively; individual module cooling channels provided to pass through a lower region of each corresponding battery module from each of the branch channels; and a connection channel configured to connect the branch channels and the main channel.

The cooling path blocking unit may be configured to block the branch channel connected to the individual module cooling channel that passes through the lower region of the certain battery module.

The battery module may include a plurality of battery cells; and a module case that accommodates the plurality of battery cells, and the module case may include at least one venting hole in a top plate that covers an upper portion of the battery cells.

The pack case may include at least one gas discharge port in an outer wall.

In another aspect of the present disclosure, there is provided a vehicle including the battery pack described above.

### Advantageous Effects

According to the present disclosure, a battery pack with enhanced fire safety compared to the conventional art may be provided by delaying or suppressing the propagation of heat energy generated from an ignited battery module within the battery pack.

In particular, the battery pack according to the present disclosure is configured to prevent a temperature rise of a cooling medium due to heat generated from an ignited battery module and to enhance cooling of other battery modules, thereby delaying or suppressing heat accumulation within the battery pack.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a perspective view schematically showing a battery pack according to an embodiment of the present disclosure.
FIG. 2 is a partially exploded perspective view showing the battery pack of FIG. 1.
FIG. 3 is a cross-sectional view showing a bottom plate of a pack case according to an embodiment of the present disclosure.
FIG. 4 is a diagram showing a pack tray according to an embodiment of the present disclosure, in which the pack tray is cut to show a blocking block member inside a cross beam.
FIG. 5 is a cross-sectional view showing a part of the battery pack according to an embodiment of the present disclosure.
FIG. 6 is a partially enlarged view of FIG. 5.
FIG. 7 is a drawing corresponding to FIG. 5, showing an example in which a blocking block member operates.
FIG. 8 is a drawing for explaining the flow of a cooling medium when a certain battery module in the battery pack according to an embodiment of the present disclosure ignites.
FIG. 9 is a schematic view showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, when explaining the present disclosure, if it is judged that a detailed description of the relevant notice structure or function may obscure the main point of the present disclosure, such detailed description will be omitted.

Since the embodiments of the present disclosure are provided to more completely explain the present disclosure to those skilled in the art, the shapes and sizes of components in the drawings may be exaggerated, omitted, or schematically illustrated for clearer explanation. Accordingly, the size or ratio of each component does not entirely reflect the actual size or ratio.

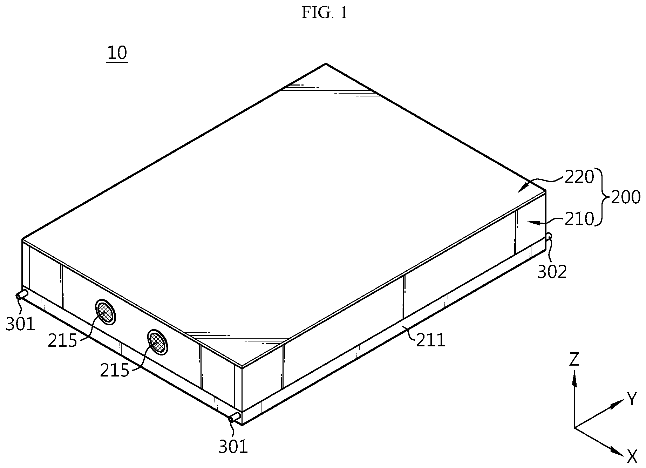

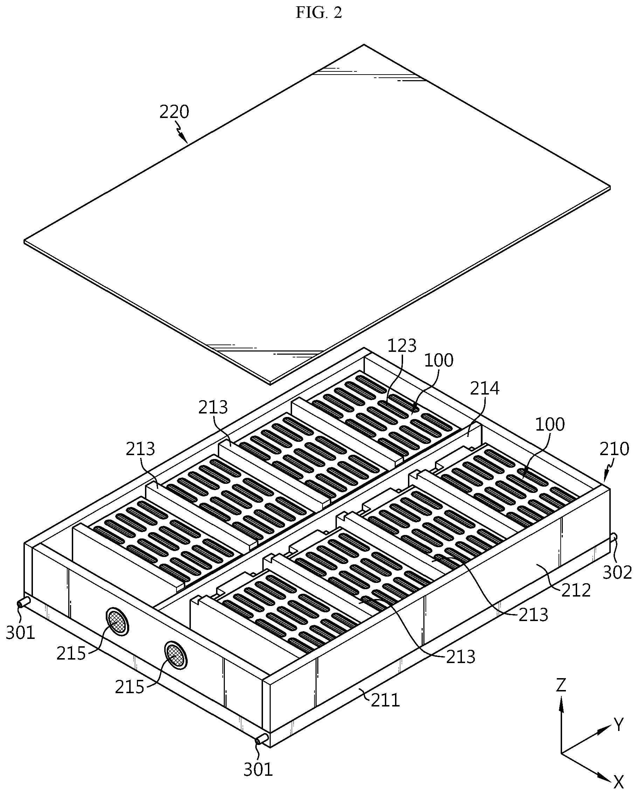

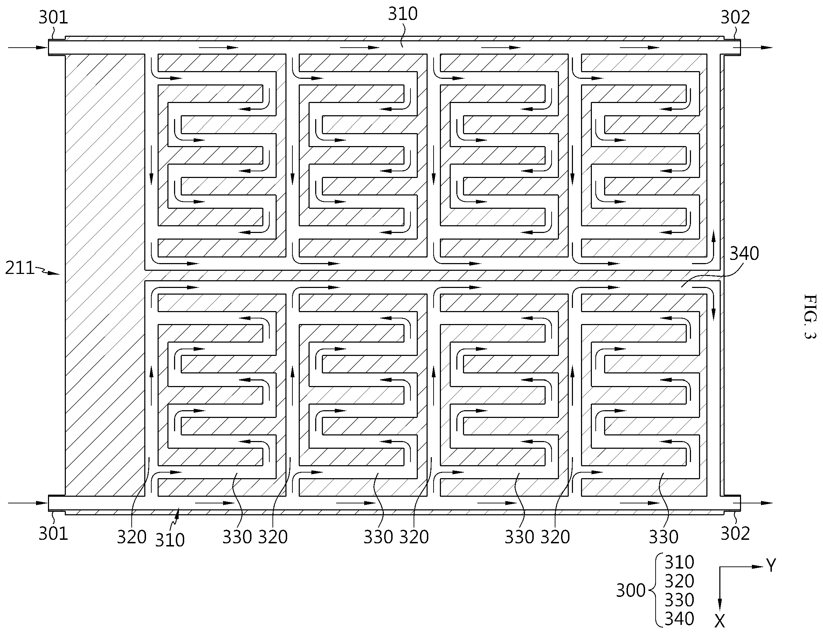

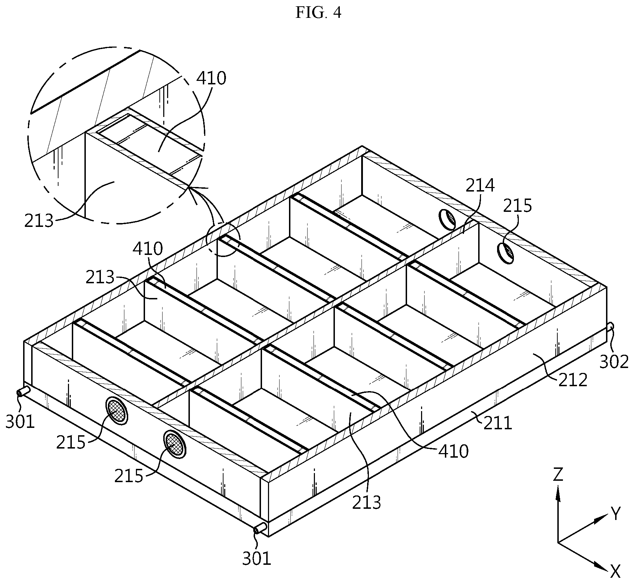

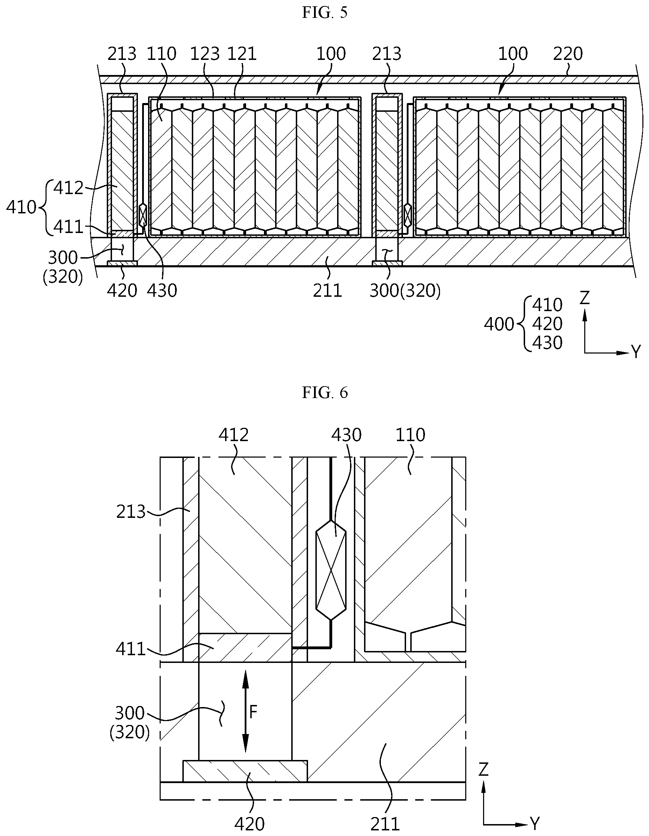

FIG. 1 is a perspective view schematically showing a battery pack according to an embodiment of the present disclosure, FIG. 2 is a partially exploded perspective view showing the battery pack of FIG. 1, FIG. 3 is a cross-sectional view showing a bottom plate of a pack case according to an embodiment of the present disclosure, FIG. 4 is a diagram showing a pack tray according to an embodiment of the present disclosure, in which the pack tray is cut to show a blocking block member inside a cross beam, and FIG. 5 is a cross-sectional view showing a part of the battery pack according to an embodiment of the present disclosure.

As shown in FIGS. 1 to 5, the battery pack 10 according to an embodiment of the present disclosure may include a plurality of battery modules 100, a pack case 200, a cooling channel 300, and a cooling path blocking unit 400.

The battery module 100 may include a plurality of battery cells 110 and a module case that accommodates the battery cells 110. Here, the battery cell 110 refers to a secondary battery including an electrode assembly, an electrolyte, and a battery case, and may be a secondary battery of any shape, such as a pouch shape, a cylindrical shape, or a rectangular shape, without limitation. The module case has an inner space capable of accommodating the battery cells 110, and may be made of a metal material, such as steel, or a non-metallic material with high rigidity, so as to protect the battery cells 110 from external impact. In addition, the module case may be configured to have a gas venting hole 123 in at least one side thereof.

The battery module 100 according to this embodiment may include at least one venting hole 123 in a top plate 121 that covers an upper portion of the battery cells 110. In the battery module 100, when the battery cells 110 therein are ignited, gas may be discharged out of the module case through the gas venting hole 123.

The pack case 200 may be configured to accommodate a plurality of battery modules 100. For example, the pack case 200 may include a pack tray 210 and a pack cover 220, as shown in FIGS. 1 and 2.

The pack tray 210 may have partitioned spaces therein, and battery modules 100 may be respectively arranged in the partitioned spaces, and may be configured in a box shape with an open top. Also, the pack cover 220 may cover the open top of the pack tray 210 and may be configured to be coupled with the pack tray 210.

More specifically, the pack tray 210 may include, as shown in FIG. 2, a bottom plate 211 that supports the battery modules 100 at the bottom of the battery modules 100, an outer wall 212 that forms a wall along an outer edge of the bottom plate 211, and a plurality of cross beams 213 and a center beam 214 that define an inner space surrounded by the outer wall 212.

The center beam 214 is a wall that extends in the horizontal direction (Y direction) and divides the inner space of the pack tray 210 into two parts, and the cross beams 214 are walls that are spaced apart from each other by a predetermined distance and extend in the vertical direction (X direction) and have both ends connected to the center beam 214 and the outer wall 212. Each cross beam 213 may have one end connected to the center beam 214 and the other end connected to the outer wall 212. In addition, the cross beams 213 may be spaced apart from each other by a distance corresponding to the width of the battery module 100.

The cross beam 213 and the center beam 214 support the outer wall 212 and increase the structural rigidity of the pack tray 210. Therefore, the pack tray 210 according to this embodiment is less likely to be deformed, such as distortion, even under external impact.

In addition, the pack tray 210 has a plurality of partitioned spaces so that the battery modules 100 may be accommodated to be spatially separated. When the battery modules 100 are accommodated in a partitioned manner as above, for example, when a thermal event occurs in any battery module 100, the cross beam 213 or the center beam 214 may block heat and high-temperature gas, thereby blocking or delaying heat transmission between the battery modules 100.

The pack tray 210 may include a gas discharge port 215. At least one gas discharge port 215 may be provided in at least one side of the outer wall 212.

The gas discharge port 215 may be formed by penetrating the outer wall 212. A metal mesh net may be coupled with the gas discharge port 215. The gas may pass through the metal mesh net, but flames or sparks may be prevented from leaking to the outside by the metal mesh net. Although not shown, a valve unit that opens and closes according to the internal and external pressure difference of the pack case 200 may be mounted to the gas discharge port 215.

For example, in this embodiment, two gas discharge ports 215 may be provided in each of the front and rear sides of the outer wall 212. One of the two gas discharge ports 215 provided at the front of the outer wall 212 may be provided at the left side (-X direction) of the center beam 214, and the other may be provided at the right side (+X direction) of the center beam 214. The two gas discharge ports 215 provided at the rear of the outer wall 212 may also be provided at each of the left and right sides of the center beam 214. Here, the gas discharge ports 215 located at the left side of the center beam 214 are used to discharge gas that may be generated in the battery modules 100 arranged at the left side of the center beam 214 to the outside of the pack case 200, and the gas discharge ports 215 located at the right side of the center beam 214 are used to discharge gas that is generated in the battery modules 100 arranged at the right side of the center beam 214 to the outside of the pack case 200.

The pack cover 220 may be provided in the form of a plate that is bolted to, for example, the upper end of the outer wall 212 of the pack tray 210 and may cover at least the open top of the pack tray 210. Although not shown, a sealing gasket may be arranged on the upper end of the outer wall 212, and a rim of the pack cover 220 may be placed on the sealing gasket.

The battery pack 10 according to the present disclosure may include a cooling channel 300 provided inside the bottom plate 211 of the pack case 200 as a cooling means for absorbing heat of the battery modules 100 generated during charging and discharging. The cooling channel 300 means a passage through which a cooling medium moves, and the cooling medium may be, for example, a coolant. The cooling channel 300 includes a cooling medium inlet 301 for receiving the cooling medium from the outside of the pack case 200, and a cooling medium outlet 302 for discharging the cooling medium to the outside of the pack case 200, and may be configured to be provided inside the bottom plate 211 of the pack case 200 to absorb heat by making indirect contact with the battery modules 100.

The battery pack 10 according to this embodiment may include two cooling channels 300, as shown in FIG. 3, to efficiently cool the battery modules 100 arranged at the left side and the battery modules 100 arranged at the right side based on the center beam 214, as shown in FIG. 2. For example, since the cooling medium absorbs heat from the battery modules 100 and moves along the cooling channel 300, the temperature increases as the cooling medium goes toward the cooling medium outlet 302. Therefore, as in this embodiment, if the cooling channel 300 for cooling the battery modules 100 arranged at the left side of the center beam 214 and the cooling channel 300 for cooling the battery modules 100 arranged at the right side of the center beam 214 are independently provided, the temperature increase of the cooling medium may be alleviated compared to the case where one cooling channel 300 is used, so that the cooling efficiency may be improved. The two cooling channels 300 according to this embodiment may be arranged symmetrically with respect to the center beam 214.

Specifically, seeing the cooling channel 300, as shown in FIG. 3, the cooling channel 300 may include a main channel 310 having a cooling medium inlet 301 at one end and a cooling medium outlet 302 at the other end, branch channels 320 branching from the main channel 310 and passing through the lower portions of the corresponding cross beams 213, individual module cooling channels 330 provided to pass through the lower region of the corresponding battery module 100 from each of the branch channels 320, and a connection channel 340 connected to the main channel 310 and the branch channels 320.

The main channel 310 may be provided in a form extending in a straight line along the longitudinal direction (Y direction) of the pack case 200 from the bottom plate 211 of the pack case 200 to the edge. The branch channels 320 are channels branched out from the main channel 310 in order to individually supply the cooling medium to the battery modules 100. In particular, each branch channel 320 may be provided to be located at the lower portion of each cross beam 213 of FIG. 3. Each branch channel 320 may be configured to be closed when a blocking block member 410 embedded in each cross beam 213 falls. At this time, the cooling medium may be blocked from flowing into the closed branch channel 320.

The individual module cooling channels 330 may be disposed in the lower region of the battery modules 100 to absorb heat of the corresponding battery modules 100, respectively. Each of the individual module cooling channels 330 may have a start point and an end point connected to the branch channel 320 and may have a tortuous path, for example, so as to indirectly contact the battery modules 100 over a wide range. Of course, the individual module cooling channel 330 may be configured differently from this embodiment.

The connection channel 340 is a path along which the cooling medium coming out of the branch channels 320 and the individual module cooling channels 330 joins, and may be configured to guide the joined cooling medium to the cooling medium outlet 302 of the main channel 310. As indicated by the arrow in FIG. 3, the cooling medium moves from the main channel 310 to the branch channel 320, enters the individual module cooling channels 330 from the branch channels 320, and absorbs heat of the battery modules 100 at the corresponding locations. The cooling medium that has absorbed the heat may move from the individual module cooling channel 330 to the cooling medium outlet 302 of the main channel 310 through the branch channel 320 again along the connection channel 340.

Meanwhile, the cooling path blocking unit 400 may be configured to selectively block the cooling channel 300 located below a certain battery module 100 when a thermal event occurs in the certain battery module 100 among the battery modules 100. Here, the certain battery module 100 refers to a battery module 100 in which an internal ignition or thermal event occurs among the battery modules 100. According to the cooling path blocking unit 400, the temperature of the cooling medium may be prevented from rapidly increasing due to the heat generated in the ignited battery module 100. The cooling path blocking unit 400 may play a role in blocking the heat energy of the cooling medium, in which the temperature rapidly increases due to the ignited battery module 100, from being transmitted to other battery modules 100.

The cooling path blocking unit 400 may include a blocking block member 410 having an electromagnet 411 disposed inside the cross beam 213 and electrically connected to each battery module 100 among the battery modules 100, and a magnetic body 420 provided inside the bottom plate 211 of the pack case 200 and disposed to face the electromagnet 411 so that a repulsive force is applied with the cooling channel 300 interposed therebetween. In addition, the cooling path blocking unit 400 may be configured such that when a thermal event occurs in the certain battery module 100, the current supply to the electromagnet 411 is cut off, causing the blocking block member 410 to fall toward the magnetic body 420 and close at least a part of the cooling channel 300 flowing into the certain battery module 100.

Specifically, as shown in FIGS. 4 and 5, the blocking block member 410 may be embedded in each cross beam 213. The cross beam 213 may have a hollow structure so that the blocking block member 410 may be accommodated therein. In addition, the cross beam 213 may be configured such that the lower end thereof communicates with the branch channel 320 of the cooling channel 300.

The blocking block member 410 may include the electromagnet 411 and a weight balance member 412 disposed on the upper portion of the electromagnet 411. Here, the electromagnet 411 means a magnet that is magnetized when current flows and returns to its original non-magnetized state when the current is cut off.

The weight balance member 412 may be a means for increasing the weight of the electromagnet 411. For example, a weight may be employed as the weight balance member 412. The electromagnet 411 levitates in the air to a predetermined height by the repulsive force between the electromagnet 411 and the magnetic body 420, and at this time, the gap between the electromagnet 411 and the magnetic body 420 may be appropriately adjusted by adjusting the weight of the weight balance member 412. In addition, when the electromagnet 411 loses magnetism and falls, the cooling channel 300 may be stably closed by the weight balance member 412 having a sense of weight. Meanwhile, the weight balance member 412 may be configured to include an insulating material. The weight balance member 412 may make it more difficult to propagate thermal energy between the battery modules 100 with the cross beam 213 interposed therebetween.

The magnetic body 420 may be provided to face the electromagnet 411 at a lower position than the cooling channel 300. The magnetic body 420 may be a permanent magnet that stably maintains magnetism even without being supplied with current from the outside.

The electromagnet 411 and the magnetic body 420 may be configured to have the same polarity facing each other. In this case, a repulsive force, which is a force that repels each other, acts between the electromagnet 411 and the magnetic body 420, as indicated by F in FIG. 6. The magnetic body 420 is fixedly coupled to the inside of the bottom plate 211 of the pack case 200, and the electromagnet 411 is not fixedly coupled to the cross beam 213. In this case, the electromagnet 411 may be levitated by the repulsive force, so that the cooling channel 300 is not closed. Here, the cooling channel 300 may mean a branch channel 320 located at the lower portion of the cross beam 213. When the electromagnet 411 loses its magnetism, the blocking block member 410 falls, closing the branch channel 320 and also closing the individual module cooling channel 330 connected to the branch channel 320. That is, the cooling path blocking unit 400 according to this embodiment is configured to block the branch channel 320 located below the cross beam 213 adjacent to the battery module 100 where the thermal event occurs, thereby closing the individual module cooling channel 330 passing through the lower region of the battery module 100 where the thermal event occurs.

The cooling path blocking unit 400 may further include a fuse unit 430. The fuse unit 430 may be coupled to a cable that connects the battery module 100 and the blocking block member 410. The electromagnet 411 may be connected to a BMS (not shown) included in the battery module 100 via a cable to receive current, for example, although schematically illustrated for convenience of the drawing. The fuse unit 430 may be coupled to the cable. Here, the fuse unit 430 may be a thermal fuse that operates at a predetermined temperature. For example, when the temperature of the fuse unit 430 reaches a specific temperature due to ignition of the battery module 100, the fuse unit 430 may be melted to block the current. Alternatively, the fuse unit 430 may be configured such that when an ignition signal is received from the BMS of the battery module 100, the circuit provided inside the fuse unit 430 is broken to block the flow of current.

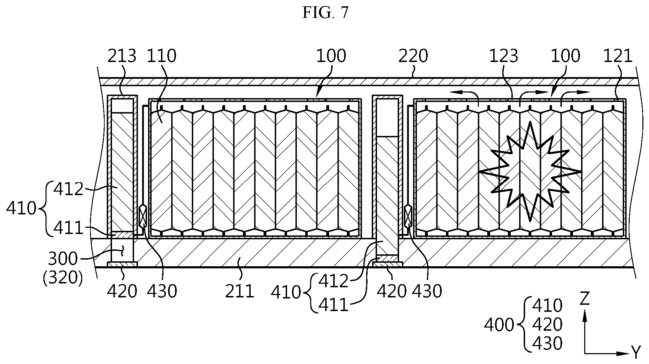

According to the fuse unit 430, as shown in FIG. 7, when the battery module 100 ignites, the fuse unit 430 connected to the ignited battery module 100 is broken to cut off the current supply, and when the electromagnet 411 of the blocking block member 410 connected to the fuse unit 430 loses magnetism, the blocking block member 410 may fall so that the corresponding cooling channel 300 may be closed. As a result, the cooling medium is not supplied to the individual module cooling channel 330 located below the ignited battery module 100.

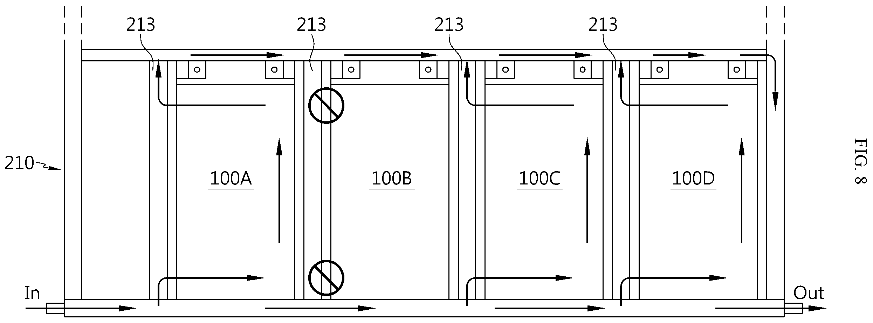

FIG. 8 is a drawing for explaining the flow of a cooling medium when a certain battery module 100 in the battery pack 10 according to an embodiment of the present disclosure ignites.

For example, assuming that a thermal event occurs in the second battery module 100B among the four battery modules 100A, 100B, 100C, and 100D shown in FIG. 8, the fuse unit 430 connected to the second battery module 100B may be damaged by heat. Then, as described above, the electromagnet 411 of the blocking block member 410 connected to the fuse unit 430 loses magnetism, so that the blocking block member 410 falls and the branch channel 320 located in the lower region of the cross beam 213 is blocked. However, the fuse units 430 connected to the remaining battery modules 100A, 100C, and 100D are not damaged unless they overheat, so the blocking block members 410 connected to the fuse units 430 do not fall inside the cross beam 213.

As a result, as shown in FIG. 8, the flow of the cooling medium is blocked only in the branch channel 320 and the individual module cooling channel 330 corresponding to the second battery module 100B, and the flow of the cooling medium may continue in the branch channels 320 and the individual module cooling channels 330 corresponding to the remaining battery modules 100A, 100C, and 100D. In this case, since the cooling medium is not supplied to the lower region of the ignited second battery module 100B, a rapid temperature increase of the cooling medium due to the heat of the ignited second battery module 100B may be prevented. In addition, since the cooling medium to be supplied to the lower region of the second battery module 100 is intensively supplied to the lower regions of the remaining battery modules 100A, 100C, and 100D, the cooling performance of the remaining battery modules 100A, 100C, and 100D may be enhanced. Accordingly, the heat of the second battery module 100B may be significantly delayed from propagating to the remaining battery modules 100A, 100C, and 100D.

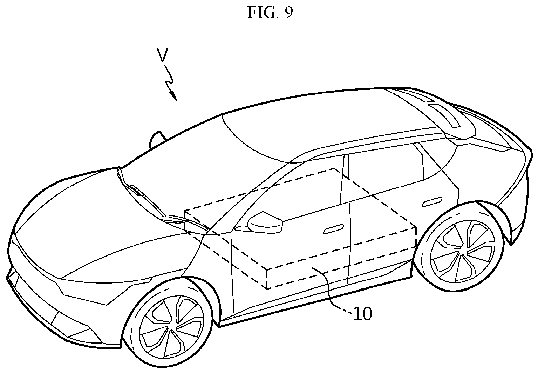

FIG. 9 is a schematic view showing a vehicle including the battery pack according to an embodiment of the present disclosure.

Referring to FIG. 9, the vehicle V according to an embodiment of the present disclosure may include the battery pack 10 according to an embodiment of the present disclosure. The vehicle according to the present disclosure may be, for example, an electric vehicle, a hybrid electric vehicle, or a plug-in hybrid vehicle. The vehicle includes a four-wheel vehicle and a two-wheel vehicle. The vehicle may be configured to operate by receiving power from the battery pack or the battery module according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

In addition, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery pack comprising:
a plurality of battery modules;
a pack case configured to accommodate the plurality of battery modules therein;
a cooling channel provided inside a bottom plate of the pack case;
cross beams configured to form a wall between the battery modules so that the battery modules are arranged in partitioned spaces, respectively; and
a cooling path blocking unit configured to selectively block a cooling channel located under a certain battery module when a thermal event occurs in the certain battery module among the battery modules.

2. The battery pack according to claim 1,
wherein the cooling path blocking unit includes:
a blocking block member having an electromagnet arranged inside the cross beam and electrically connected to each of the battery modules; and
a magnetic body provided inside the bottom plate of the pack case and disposed to face the electromagnet so that a repulsive force is applied with the cooling channel being interposed therebetween,
wherein when a thermal event occurs in the certain battery module, a current supply to the electromagnet is cut off so that the blocking block member falls and closes at least a part of the cooling channel flowing into the certain battery module.

3. The battery pack according to claim 2,
wherein a fuse unit is coupled with a cable, which connects the certain battery module and the blocking block member, to block the flow of current based on a predetermined temperature or signal.

4. The battery pack according to claim 3,
wherein the fuse unit is a thermal fuse.

5. The battery pack according to claim 2,
wherein the blocking block member includes a weight balance member disposed on an upper portion of the electromagnet.

6. The battery pack according to claim 5,
wherein the weight balance member includes an insulating material.

7. The battery pack according to claim 1,
wherein the cooling channel includes:
a main channel having a cooling medium inlet and a cooling medium outlet communicating with an outside of the pack case;
branch channels branching from the main channel and passing through lower portions of the corresponding cross beams, respectively;
individual module cooling channels provided to pass through a lower region of each corresponding battery module from each of the branch channels; and
a connection channel configured to connect the branch channels and the main channel.

8. The battery pack according to claim 7,
wherein the cooling path blocking unit is configured to block the branch channel connected to the individual module cooling channel that passes through the lower region of the certain battery module.

9. The battery pack according to claim 1,
wherein the battery module includes a plurality of battery cells; and a module case that accommodates the plurality of battery cells, and
wherein the module case includes at least one venting hole in a top plate that covers an upper portion of the battery cells.

10. The battery pack according to claim 1,
wherein the pack case includes at least one gas discharge port in an outer wall.

11. A vehicle comprising the battery pack according to any one of claims 1 to 10.
